# EUROPÄISCHE PATENTSCHRIFT

(11) **EP 2 357 211 B1**
(45) Veröffentlichungstag und Bekanntmachung des Hinweises auf die Patenterteilung: **21.11.2018**
(21) Anmeldenummer: 10153826.2
(22) Anmeldetag: 17.02.2010
(51) Int. Cl.: C08L 15/00, C08L 19/00, B60C 1/00

(54) **SCHWEFELVERNETZBARE KAUTSCHUKMISCHUNG**
SULPHUR CROSSLINKABLE RUBBER COMPOSITION
COMPOSITION DE CAOUTCHOUC RÉTICULABLE AU SOUFRE

(43) Veröffentlichungstag der Anmeldung: 17.08.2011
(73) Patentinhaber: Continental Reifen Deutschland GmbH, 30165 Hannover (DE)
(72) Erfinder: Torbrügge, Thorsten, 30855 Langenhagen (DE); Recker, Carla, 30167 Hannover (DE); Dettmer, Fabian, 38106 Braunschweig (DE); Jocher, Christoph, 30823 Garbsen (DE); Kramer, Thomas, 31832 Springe (DE); Kölle, Philipp, 30451 Hannover (DE)
(74) Vertreter: Finger, Karsten

(56) Entgegenhaltungen:
- EP-A1- 2 098 564
- EP-A1- 2 105 462
- US-A- 4 714 732
- US-A- 6 121 392
- US-A1- 2007 161 735
- US-B2- 7 084 228

## Beschreibung

Die Erfindung betrifft eine schwefelvernetzbare Kautschukmischung enthaltend zumindest einen Dienkautschuk, zumindest ein Harz und zumindest einen Füllstoff. Die Erfindung betrifft ferner einen Reifen, dessen Laufstreifen zumindest zum Teil aus einer mit Schwefel vulkanisierten Kautschukmischung besteht.

Da die Fahreigenschaften eines Reifens, insbesondere Fahrzeugluftreifens, in einem großen Umfang von der Kautschukzusammensetzung des Laufstreifens abhängig sind, werden besonders hohe Anforderungen an die Zusammensetzung der Laufstreifenmischung gestellt. So wurden vielfältige Versuche unternommen, die Eigenschaften des Reifens durch die Variation der Polymerkomponenten und der Füllstoffe in der Laufstreifenmischung positiv zu beeinflussen. Dabei muss man berücksichtigen, dass eine Verbesserung in der einen Reifeneigenschaft oft eine Verschlechterung einer anderen Eigenschaft mit sich bringt. Zu den Eigenschaften, die in Wechselwirkung stehen und bei denen die Verbesserung der einen Eigenschaft üblicherweise mit der Verschlechterung zumindest einer anderen Eigenschaft einher geht, zählt das Trio aus Abrieb, Rollwiderstand und Nasshaftung.

Aus der EP 0 899 287 B1 ist es bereits bekannt, das Abriebverhalten und die Nasshaftung eines Fahrzeugluftreifens dadurch zu verbessern, dass die Kautschukmischung für den Laufstreifen 50 bis 90 phr eines Kautschuks mit einer Glasumwandlungstemperatur T_{g} von -110 bis -80 °C, 10 bis 50 phr eines Kautschuks mit einer Glasumwandlungstemperatur T_{g} von -79 bis +20 °C und 15 bis 50 phr eines Harzes, ausgewählt aus er Gruppe bestehend aus Kohlenwasserstoffharzen, Phenol/Acetylen-Harzen, von Kolophonium abgeleiteten Harzen oder deren Mischungen, enthält.

Die US 7,084,228 B2 offenbart zur Verbesserung des Abriebverhaltens von Fahrzeugluftreifen den Einsatz von Harzen in der Laufstreifenmischung in Kombination mit 40 bis 100 phr eines Dienelastomers mit einer Glasumwandlungstemperatur T_{g} von -65 bis -10 °C und 0 bis 60 phr eines Dienelastomers mit einer Glasumwandlungstemperatur T_{g} von -110 bis -80 °C.

Auch aus der WO 02/072688 A1 und der WO 02/072689 A1 ist schon die Kombination von speziellen Harzen mit Kautschuken mit niedrigen Glasumwandlungstemperaturen T_{g} in Reifenlaufstreifenmischungen zur Verringerung der Abriebs von Fahrzeugluftreifen bekannt.

In den vorgenannten Schriften wird als Dienelastomer mit einer Glasumwandlungstemperatur T_{g} von -110 bis -80 °C Polybutadien eingesetzt. Spezielle funktionalisierte Kautschuktypen werden in den Schriften nicht offenbart.

Weitere Reifenkautschukmischungen, die Dienpolymere, Harze und Füllstoffe enthalten, sind aus der US 4,714,732, der US 2007/0161735 A1 und der EP 2 105 462 A1 bekannt.

Die EP 2 098 564 A1 beschreibt Reifenkautschukmischungen mit funktionalisierten Styrol-Butadien-Copolymeren, Füllstoffen und einem PE-Wachs.

Der Erfindung liegt die Aufgabe zugrunde, eine Kautschukmischung bereitzustellen, die bei Verwendung als Reifenlaufstreifen ein verbessertes Abriebverhalten ohne wesentliche Verschlechterung des Rollwiderstandes und der Nasshaftung bewirkt.

Gelöst wird die Aufgabe erfindundsgemäß durch eine kantschukmischung mit den Merkmalen des Anspruchs 1.

Durch die spezielle Kombination zumindest eines speziellfunktionalisierten Dienkautschuks mit niedriger Glasumwandlungstemperatur, der an polaren Füllstoff gebunden werden kann, mit zumindest einem speziellen Harz mit den vorgenannten Eigenschaften und Füllstoff gelingt es, das Abriebverhalten einer Laufstreifenmischung deutlich zu verbessern, was bei Zugabe von Harzen, die ja eine Mischung weicher machen, nicht zu erwarten ist. Gleichzeitig verbleiben die Nasshaftung und der Rollwiderstand auf hohem Niveau. Zusätzlich hat sich herausgestellt, dass auch die Reißeigenschaften der Mischungen verbessert werden.

Als funktionalisierte Dienkautschuke können alle dem Fachmann bekannten Dienkautschuke eingesetzt werden. Zu diesen Dienkautschuken zählen alle Kautschuke mit einer ungesättigten Kohlenstoffkette, die sich zumindest teilweise von konjugierten Dienen ableiten, wie Polyisoprene, Styrol-Butadien-Copolymere, Polybutadiene, Isopren-Butadien-Copolymere oder Styrol-Isopren-Butadien-Copolymere. Besonders vorteilhaft im Hinblick auf die Verbesserung des Abriebverhaltens ist allerdings der Einsatz zumindest eines funktionalisierten lösungspolymerisierten Styrol-Butadien-Copolymers (S-SBR). Es können aber auch mehrere funktionalisierte lösungspolymerisierte Styrol-Butadien-Copolymere (S-SBR) in der Mischung enthalten sein.

Gemäß einer bevorzugten Weiterbildung der Erfindung enthält die Kautschukmischung 10 bis 100 phr, vorzugsweise 30 bis 100 phr, des funktionalisierten Dienkautschuks.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Neben den funktionalisierten Dienkautschuken kann die schwefelvernetzbare Kautschukmischung weitere nicht-funktionalisierte Dienkautschuke enthalten. Besonders bevorzugt ist, wenn der Dienkautschuk oder die Dienkautschuke ausgewählt ist bzw. sind aus der Gruppe, bestehend aus Naturkautschuk (NR), synthetischem Polyisopren (IR), Polybutadien (BR) und Styrol-Butadien-Copolymer (SBR). Diese Dienelastomere lassen sich gut zu der erfindungsgemäßen Kautschukmischung verarbeiten und ergeben in den vulkanisierten Reifen gute Reifeneigenschaften.

Die Kautschukmischung kann als Dienkautschuk Polyisopren (IR, NR) enthalten. Dabei kann es sich sowohl um cis-1,4-Polyisopren als auch um 3,4-Polyisopren handeln. Bevorzugt ist allerdings die Verwendung von cis-1,4-Polyisoprenen mit einem cis-1,4-Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, der cis-1,4-Anteil im Naturkautschuk ist größer 99 Gew.-%.

Enthält die Kautschukmischung als Dienkautschuk Polybutadien (BR), kann es sich dabei sowohl um cis-1,4- als auch um Vinyl-Polybutadien (10-90 Gew.-% Vinyl-Anteil) handeln. Bevorzugt ist die Verwendung von cis-1,4-Polybutadien mit einem cis-1,4-Anteil größer 90 Gew.-%, welches z. B. durch Lösungspolymerisation in Anwesenheit von Katalysatoren vom Typ der seltenen Erden hergestellt werden kann.

Bei dem Styrol-Butadien-Copolymer kann es sich um lösungspolymerisiertes Styrol-Butadien-Copolymer (S-SBR) mit einem Styrolgehalt, bezogen auf das Polymer, von ca. 10 bis 45 Gew.-% und einem Vinylgehalt (Gehalt an 1,2-gebundenem Butadien, bezogen auf das gesamte Polymer) von 10 bis 70 Gew.-% handeln, welches zum Beispiel unter Verwendung von Lithiumalkylen in organischem Lösungsmittel hergestellt werden kann. Die S-SBR können auch gekoppelt und endgruppenmodifiziert sein. Es können aber auch emulsionspolymerisiertes Styrol-Butadien-Copolymer (E-SBR) sowie Mischungen aus E-SBR und S-SBR eingesetzt werden. Der Styrolgehalt des E-SBR beträgt ca. 15 bis 50 Gew.-% und es können die aus dem Stand der Technik bekannten Typen, die durch Copolymerisation von Styrol und 1,3-Butadien in wässriger Emulsion erhalten wurden, verwendet werden.

Zusätzlich zu den genannten Dienkautschuken kann die Mischung aber auch noch andere Kautschuktypen, wie z. B. Styrol-Isopren-Butadien-Terpolymer, Isopren-Butadien-copolymer, Butylkautschuk, Halobutylkautschuk oder Ethylen-Propylen-Dien-Kautschuk (EPDM) enthalten.

Als besonders vorteilhaft im Hinblick auf Nassgriff und Rollwiderstand hat es sich herausgestellt, wenn die Kautschukmischung zumindest zwei Dienkautschuke enthält, von denen zumindest einer funktionalisiert ist, wobei ein Dienkautschuk eine Glasumwandlungstemperatur T_{g} von -50 bis -15 °C und ein anderer Dienkautschuk eine Glasumwandlungstemperatur T_{g} von -110 bis -50 °C aufweist. Als Dienkautschuke kommen dabei die schon im Vorherigen genannten Dienkautschuke in Frage.

Dabei ist es zum einen möglich, dass der Dienkautschuk mit einer Glasumwandlungstemperatur T_{g} von -50 bis -15 °C funktionalisiert ist. Denkbar sind hier beispielsweise Kombinationen von einem funktionalisierten S-SBR mit einer Glasumwandlungstemperatur T_{g} von -50 bis -15 °C und einem nicht-funktionalisierten Polybutadien mit einer Glasumwandlungstemperatur T_{g} von -110 bis -50 °C.

Zum anderen kann auch der zweite Dienkautschuk mit einer Glasumwandlungstemperatur T_{g} von -110 bis -50 °C die Funktionalisierung aufweisen, die eine Anbindung an Füllstoffe ermöglicht. Möglich ist hier z. B. eine Kombination von einem nicht funktionalisierten S-SBR oder E-SBR mit einer Glasumwandlungstemperatur T_{g} von -50 bis -15 °C und einem funktionalisierten S-SBR mit einer Glasumwandlungstemperatur T_{g} von -110 bis -50 °C. Vorzugsweise sind beide Dienkautschuke funktionalisiert, so dass die Kautschukmischung beispielsweise zwei verschiedene Typen von funktionalisierten S-SBR enthalten kann, eines mit einer Glasumwandlungstemperatur T_{g} von -110 bis -50 °C und eines mit einer Glasumwandlungstemperatur T_{g} von -50 bis -15 °C.

Um die positiven Ergebnisse hinsichtlich des Abriebs zu erhalten, ist es wesentlich, dass der Dienkautschuk entlang der Polymerkette und/oder am Ende der Kette eine Funktionalisierung aufweist, die eine Anbindung an Füllstoffe ermöglicht. Ein besonders gutes Abriebverhalten bei gleichzeitig niedrigem Rollwiderstand wird allerdings erzielt, wenn die Kautschukmischung einen polaren Füllstoff enthält und der funktionalisierte Dienkautschuk mit zumindest einer Gruppe ausgewählt aus Hydroxyl-, Carboxyl-, Amino-, Phthalocyanin-, Epoxy-, Silyl-, Silanol-, Siloxan- und/oder Aminosiloxangruppen funktionalisiert ist. Die funktionalisierten Dienkautschuke können demnach auch mehrere unterschiedliche Funktionalitäten aufweisen.

Die Kautschukmischung enthält zumindest ein aliphatisches und/oder aromatisches Kohlenwasserstoffharz mit einem Erweichungspunkt (Ring und Kugel gemäß ASTM E 28) von 50 bis 150 °C und einem mittleren Molekulargewicht Mₙ von 200 bis 2000 g/mol sowie einer Polydispersität D = M_{w}/Mₙ von 1 bis 5. Es können aber auch mehrere Harze im Gemisch eingesetzt werden.

Vorzugsweise ist das aliphatische und/oder aromatische Kohlenwasserstoffharz ausgewählt aus der Gruppe, bestehend aus Terpen-, C₅-, C₉-, Cumaron-Inden- und Dicyclopentadien(DCPD)-Harzen, aus α-Methylstyrol hergestelltem aromatischem Harz sowie Copolymeren aus den Monomeren dieser Harztypen. Nicht erfindungsgemäß geeignete Harze sind polare Harze, wie Phenolharze, die keine Abriebverbesserung bewirken.
C₅- bzw. C₉-Harzen sind Kohlenwasserstoffharze, die auf unterschiedlichen C₅- bzw. C₉-Monomeren basieren.

Gemäß einer bevorzugten Weiterbildung der Erfindung handelt es sich bei dem aliphatischen und/oder aromatischen Kohlenwasserstoffharz um ein C₅-Harz. Mit diesem Harztyp können sehr gute Reißeigenschaften erzielt werden.

Die Kautschukmischung kann als Füllstoffe unterschiedlichste dem Fachmann bekannte Füllstoffe, wie Ruß, Kieselsäure, Alumosilicate, Kreide, Stärke, Magnesiumoxid, Titandioxid oder Kautschukgele, enthalten. Zumindest ein polaren Füll stoff muss enthalten sein.

Wird Kieselsäure als Füllstoff eingesetzt, geschieht dies vorzugsweise in Mengen von 10 bis 150 phr. Bei den Kieselsäuren kann es sich um die für Reifenkautschukmischungen üblichen Kieselsäuren handeln. Besonders bevorzugt ist es, wenn eine fein verteilte, gefällte Kieselsäure verwendet wird, die eine Stickstoff-Oberfläche (BET-Oberfläche) (gemäß DIN 66131 und 66132) von 35 bis 350 m²/g, vorzugsweise von 145 bis 270 m²/g und eine CTAB-Oberfläche (gemäß ASTM D 3765) von 30 bis 350 m²/g, vorzugsweise von 100 bis 285 m²/g, aufweist. Derartige Kieselsäuren führen z. B. in Kautschukmischungen für Reifenlaufstreifen zu besonders guten physikalischen Eigenschaften der Vulkanisate. Außerdem können sich Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs VN3 (Handelsname) der Firma Degussa als auch hoch dispergierbare Kieselsäuren, so genannte HD-Kieselsäuren (z. B. Ultrasil 7000 der Firma Degussa), zum Einsatz kommen.

Zur Verbesserung der Verarbeitbarkeit und zur Anbindung der Kieselsäure und anderer ggf. vorhandener polarer Füllstoffe an den Dienkautschuk können Silan-Kupplungsagenzien in Kautschukmischungen eingesetzt werden. Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: - SCN, -SH, -NH₂ oder -Sₓ- (mit x = 2-8). So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S der Firma Degussa) zugesetzt werden. Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT in verschiedenen Varianten von der Firma Momentive Performance Materials, USA, oder solche, die unter dem Namen VP Si 363 von der Firma Evonik Industries, Deutschland vertrieben werden.

Die Silan-Kupplungsagenzien werden in Mengen von 0,2 bis 30 Gewichtsteilen, vorzugsweise 1 bis 15 Gewichtsteilen, bezogen auf 100 Gewichtsteile Füllstoff, insbesondere Kieselsäure, eingesetzt, da dann eine optimale Anbindung des Füllstoffes an den oder die Kautschuke erfolgen kann.

Die Kautschukmischung kann außer den genannten Substanzen noch andere Zusatzstoffe, wie z. B. Weichmacher (z. B. aromatische, naphthenische oder paraffinische Mineralölweichmacher, MES (mild extraction solvate), RAE-Öle, TDAE (treated distillate aromatic extract), Öle auf Basis nachwachsender Rohstoffe (wie z. B. Rapsöl oder Faktisse), so genannte BTL-Öle (wie sie in der Anmeldung mit der Anmeldenummer DE 10 2008 035962.9 offenbart sind) oder flüssige Polymere (wie z. B. flüssiges Polybutadien)) aufweisen.

Des Weiteren kann die erfindungsgemäße Kautschukmischung übliche Zusatzstoffe in üblichen Gewichtsteilen enthalten. Zu diesen Zusatzstoffen zählen Alterungsschutzmittel, wie z. B. N-Phenyl-N'-(1,3-dimethylbutyl)-p-phenylendiamin (6PPD), N-Isopropyl-N'-phenyl-p-phenylendiamin (IPPD), 2,2,4-Trimethyl-1,2-dihydrochinolin (TMQ) und andere Substanzen, wie sie beispielsweise aus J. Schnetger, Lexikon der Kautschuktechnik, 2. Auflage, Hüthig Buch Verlag, Heidelberg, 1991, S. 42-48 bekannt sind, Aktivatoren, wie z. B. Fettsäuren (z. B. Stearinsäure), Wachse, Harze und Mastikationshilfsmittel, wie z. B. 2,2'-Dibenzamidodiphenyldisulfid (DBD).

Die Vulkanisation wird in Anwesenheit von Schwefel oder Schwefelspendern durchgeführt, wobei einige Schwefelspender zugleich als Vulkanisationsbeschleuniger wirken können. Schwefel oder Schwefelspender werden im letzten Mischungsschritt in den vom Fachmann gebräuchlichen Mengen (0,4 bis 4 phr, Schwefel bevorzugt in Mengen von 1,5 bis 2,5 phr) der Kautschukmischung zugesetzt.

Des Weiteren kann die Kautschukmischung vulkanisationsbeeinflussende Substanzen Vulkanisationsbeschleuniger, Vulkanisationsverzögerer und Vulkanisationsaktivatoren in üblichen Mengen enthalten, um die erforderliche Zeit und/oder die erforderliche Temperatur der Vulkanisation zu kontrollieren und die Vulkanisateigenschaften zu verbessern. Die Vulkanisationsbeschleuniger können dabei zum Beispiel ausgewählt sein aus folgenden Beschleunigergruppen: Thiazolbeschleuniger wie z. B. 2-Mercaptobenzothiazol, Sulfenamidbeschleuniger wie z. B. Benzothiazyl-2-cyclohexylsulfenamid (CBS), Guanidinbeschleuniger wie z. B. N,N'-Diphenylguanidin (DPG), Dithiocarbamatbeschleuniger wie z. B. Zinkdibenzyldithiocarbamat, Disulfide, Thiophosphate, Thiurambeschleuniger. Die Beschleuniger können auch in Kombination miteinander eingesetzt werden, wobei sich synergistische Effekte ergeben können.

Die Herstellung der erfindungsgemäßen Kautschukmischung erfolgt auf herkömmliche Art und Weise, wobei zunächst in der Regel eine Grundmischung, die sämtliche Bestandteile mit Ausnahme des Vulkanisationssystems (Schwefel und vulkanisationsbeeinflussende Stoffe) enthält, in ein oder mehreren Mischstufen hergestellt wird und im Anschluss durch Zugabe des Vulkanisationssystems die Fertigmischung erzeugt wird. Anschließend wird die Mischung weiterverarbeitet, z. B. durch einen Extrusionsvorgang, und in die entsprechende Form gebracht. Bevorzugt wird die Mischung in die Form eines Laufstreifens gebracht. Ein so erzeugter Laufstreifenmischungsrohling wird bei der Herstellung des Reifenrohlings, insbesondere Fahrzeugluftreifenrohlings, wie bekannt, aufgelegt. Der Laufstreifen kann aber auch auf einen Reifenrohling, der bereits alle Reifenteile bis auf den Laufstreifen enthält, in Form eines schmalen Kautschukmischungsstreifens aufgewickelt werden. Die auf diese Weise mit der erfindungsgemäßen Mischung hergestellten Reifen weisen eine hohe Haltbarkeit auf.

Die Erfindung soll nun anhand von Vergleichs- und Ausführungsbeispielen, die in der Tabelle 1 zusammengefasst sind, näher erläutert werden.

Bei sämtlichen in den Tabellen enthaltenen Mischungsbeispielen sind die angegebenen Mengenangaben Gewichtsteile, die auf 100 Gewichtsteile Gesamtkautschuk bezogen sind (phr). Die Vergleichsmischungen sind mit V, die erfindungsgemäße Mischung ist mit E gekennzeichnet. Die Mischung 1(V) ist eine übliche Reifenlaufstreifenmischung, die als Referenz dient. Weichmacher wurde in den Mischungen 3(E) und 5(E) durch Harz ersetzt. Bei Mischung 3(E) sind beide eingesetzten Dienkautschuke mit OH-Gruppen funktionalisiert, bei der Mischung 5(E) ist nur das S-SBR funktionalisiert, das Polybutadien nicht.

Die Mischungsherstellung erfolgte unter üblichen Bedingungen in mehreren Stufen in einem Labortangentialmischer. Aus sämtlichen Mischungen wurden Prüfkörper durch 20 minütige Vulkanisation unter Druck bei 160 °C hergestellt und mit diesen Prüfkörpern für die Kautschukindustrie typische Materialeigenschaften mit den im Folgenden angegebenen Testverfahren ermittelt.
- Shore-A-Härte bei Raumtemperatur gemäß DIN 53 505
- Rückprallelastizität bei Raumtemperatur und 70 °C gemäß DIN 53 512,
- Zugfestigkeit bei Raumtemperatur gemäß DIN 53 504
- Reißdehnung bei Raumtemperatur gemäß DIN 53 504
- Spannungswert (Modul) bei 50 und 300 % Dehnung bei Raumtemperatur gemäß DIN 53 504
- Abrieb bei Raumtemperatur gemäß DIN 53516

**Tabelle 1**

| **Bestandteile** | **Einheit** | **1(V)** | **2(V)** | **3(E)** | **4(V)** | **5(E)** |
|---|---|---|---|---|---|---|
| Naturkautschuk | phr | 15 | 15 | 15 | 15 | 15 |
| Polybutadien^{a} | phr | 0 | 0 | 0 | 25 | 25 |
| S-SBR 1^{b} | phr | 65 | 30 | 30 | 60 | 60 |
| S-SBR 2^{c} | phr | 20 | 55 | 55 | 0 | 0 |
| Weichmacheröl | phr | 28 | 28 | 8 | 28 | 8 |
| RußN121 | phr | 5 | 5 | 5 | 5 | 5 |
| Kieselsäure^{d} | phr | 95 | 95 | 95 | 95 | 95 |
| C₅-Harz^{e} | phr | 0 | 0 | 20 | 0 | 20 |
| Alterungsschutzmittel | phr | 5,8 | 5,8 | 5,8 | 5,8 | 5,8 |
| Ozonschutzwachs | phr | 1,5 | 1,5 | 1,5 | 1,5 | 1,5 |
| Zinkoxid | phr | 2 | 2 | 2 | 2 | 2 |
| Stearinsäure | phr | 1 | 1 | 1 | 1 | 1 |
| Verarbeitungshilfsmittel | phr | 3 | 3 | 3 | 3 | 3 |
| Silan-Kupplungsagens | phr | 7 | 7 | 7 | 7 | 7 |
| Beschleuniger | phr | 4,1 | 4,1 | 4,1 | 4,1 | 4,1 |
| Schwefel | phr | 1,8 | 1,8 | 1,8 | 1,8 | 1,8 |

| **Eigenschaften** | | | | | | |
|---|---|---|---|---|---|---|
| Shore A-Härte bei RT | Shore A | 69,3 | 69,1 | 70,1 | 70,5 | 70,5 |
| Rückprallelastizität bei RT | % | 22,7 | 30,3 | 22,6 | 27,2 | 18,9 |
| Rückprallelastizität bei RT | % | 42,7 | 47,5 | 45,5 | 45,8 | 40,4 |
| Zugfestigkeit bei RT | MPa | 16,3 | 16,4 | 18,0 | 16,4 | 17,8 |
| Reißdehnung bei RT | % | 482 | 431 | 457 | 466 | 500 |
| Spannungswert 50 % | MPa | 1,3 | 1,5 | 1,5 | 1,4 | 1,5 |
| Spannungswert 300 % | MPa | 9,9 | 11,3 | 11,6 | 10,4 | 10,4 |
| Abrieb | mm³ | 124 | 70 | 70 | 114 | 104 |

| | | | | | | |
|---|---|---|---|---|---|---|
| ^{a}High-cis Polybutadien, nicht funktionalisiert, T_{g} = -105°C ^{b}lösungspolymerisiertes Styrol-Butadien-Copolymer, Styrolgehalt: 21 Gew.-%, Vinylanteil ca. 61 %, funktionalisiert mit Hydroxylgruppen, T_{g} = -25°C, Nipol NS 616, ZEON Deutschland GmbH ^{c}lösungspolymerisiertes Styrol-Butadien-Copolymer, Styrolgehalt: 15 Gew.-%, Vinylanteil ca. 25 %, funktionalisiert mit Hydroxylgruppen, T_{g} = -65°C, Nipol NS 612, ZEON Deutschland GmbH ^{d}Zeosil® 1165 MP, Rhodia GmbH ^{e}aliphatisches C₅-Harz, Erweichungspunkt ca. 100 °C, Mn = 1200 g/mol, D = 2,9, Escorez 1102, ExxonMobil Central Europe Holding GmbH | | | | | | |

Aus der Tabelle 1 wird ersichtlich, dass die Zudosierung von C₅-Harz zur Mischung 3(E) nicht zu einer üblicherweise zu erwartenden Verschlechterung des Abriebs führt, sondern der Abrieb auf sehr geringem Niveau verbleibt. Bei der Mischung 5(E) verbessert sich sogar das Abriebverhalten im Vergleich zur Mischung 4(V) ohne Harz. Gleichzeitig ist aber die Rückprallelastizität bei Raumtemperatur der Mischung 3(E) auf dem Niveau der Referenzmischung 1(V), die der Mischung 5(E) liegt sogar noch darunter, wobei eine niedrige Rückprallelastizität bei Raumtemperatur als Indikator für eine gute Nasshaftung dient.
Zusätzlich zeichnet sich die Mischung 3(E) durch einen geringen Rollwiderstand aus, was sich in einer hohen Rückprallelastizität bei 70 °C widerspiegelt. Auch die Reißeigenschaften der erfindungsgemäßen Mischungen 3(E) und 5(E) sind im Vergleich zu den Mischungen 2(V) und 4(V), die kein Harz enthalten, deutlich verbessert.
Bei Verwendung der Mischungen 3(E) oder 5(E) für den Laufstreifen eines Fahrzeugluftreifens weist der Reifen demzufolge ein gutes Abriebverhalten bei geringem Rollwiderstand und guter Nasshaftung auf.

## Patentansprüche

1. Schwefelvemetzbare Kautschukmischung, enthaltend
- zumindest einen mit zumindest einer Gruppe ausgewählt aus Hydroxyl-, Carboxyl-, Amino-, Phthalocyanin-, Epoxy-, Silyl-, Silanol-, Siloxan- und/oder Aminosiloxangruppen funktionalisierten Dienkautschuk, dessen Funktionalisierung entlang der Polymerkette und/oder am Ende vorliegt, wobei der Dienkautschuk eine Glasumwandlungstemperatur T_{g} von -110 bis -15 °C aufweist,
- zumindest ein aliphatisches und/oder aromatisches Kohlenwasserstoffharz mit einem Erweichungspunkt (Ring und Kugel gemäß ASTM E 28) von 50 bis 150 °C und einem mittleren Molekulargewicht Mₙ von 200 bis 2000 g/mol sowie einer Polydispersität D = M_{w}/Mₙ von 1 bis 5 und
- zumindest einen polaren Füllstoff.

2. Kautschukmischung nach Anspruch 1, **dadurch gekennzeichnet, dass** der bzw. die funktionalisierte(n) Dienkautschuk(e) ein funktionalisiertes lösungspolymerisiertes Styrol-Butadien-Copolymer (S-SBR) ist bzw. funktionalisierte lösungspolymerisierte Styrol-Butadien-Copolymere (S-SBR) sind.

3. Kautschukmischung nach Anspruch 1 oder 2, **dadurch gekennzeichnet, dass** die Kautschukmischung 10 bis 100 phr, vorzugsweise 30 bis 100 phr, des bzw. der funktionalisierten Dienkautschuks bzw. Dienkautschuke enthält.

4. Kautschukmischung zumindest einem der Ansprüche 1 bis 3, **dadurch gekennzeichnet, dass** sie zumindest zwei Dienkautschuke enthält, von denen zumindest einer funktionalisiert ist, wobei ein Dienkautschuk eine Glasumwandlungstemperatur T_{g} von -50 bis -15 °C und ein anderer Dienkautschuk eine Glasumwandlungstemperatur T_{g} von -110 bis -50 °C aufweist.

5. Kautschukmischung nach Anspruch 4, **dadurch gekennzeichnet, dass** der Dienkautschuk mit einer Glasumwandlungstemperatur T_{g} von -50 bis -15 °C funktionalisiert ist.

6. Kautschukmischung nach Anspruch 4 oder 5, **dadurch gekennzeichnet, dass** der Dienkautschuk mit einer Glasumwandlungstemperatur T_{g} von -110 bis -50 °C funktionalisiert ist.

7. Kautschukmischung nach zumindest einem der Ansprüche 1 bis 6, **dadurch gekennzeichnet, dass** das aliphatische und/oder aromatische Kohlenwasserstoffharz ausgewählt ist aus der Gruppe, bestehend aus Terpen-, C₅-, C₉-, Cumaron-Inden- und Dicyclopentadien(DCPD)-Harzen, aus α-Methylstyrol hergestelltem aromatischem Harz sowie Copolymeren aus den Monomeren dieser Harztypen.

8. Kautschukmischung nach Anspruch 7, **dadurch gekennzeichnet, dass** das aliphatische und/oder aromatische Kohlenwasserstoffharz ein C₅-Harz ist.

9. Kautschukmischung nach zumindest einem der Ansprüche 1 bis 8, **dadurch gekennzeichnet, dass** sie 5 bis 50 phr, vorzugsweise 10 bis 30 phr, aliphatisches und/oder aromatisches Kohlenwasserstoffharz enthält.

10. Kautschukmischung nach zumindest einem der Ansprüche 1 bis 9, **dadurch gekennzeichnet, dass** sie 10 bis 150 phr Kieselsäure enthält.

11. Reifen, dessen Laufstreifen zumindest zum Teil aus einer mit Schwefel vulkanisierten Kautschukmischung nach zumindest einem der Ansprüche 1 bis 10 besteht.

## Claims

1. Sulfur-crosslinkable rubber mixture, comprising
- at least one diene rubber with at least one group selected from hydroxy, carboxy, amino, phthalocyanine, epoxy, silyl, silanol, siloxane, and/or aminosiloxane groups, the functionalization of which is present along the polymer chain and/or at the end, where the glass transition temperature T_{g} of the diene rubber is from -110 to -15°C,
- at least one aliphatic and/or aromatic hydrocarbon resin with a softening point (ring and ball in accordance with ASTM E28) of from 50 to 150°C and with an average molar mass Mₙ of from 200 to 2000 g/mol, and also with a polydispersity D = M_{w}/Mₙ of from 1 to 5, and
- at least one polar filler.

2. Rubber mixture according to Claim 1, **characterized in that** the functionalized diene rubber(s) is/are functionalized solution-polymerized styrenebutadiene copolymer(s) (SSBR).

3. Rubber mixture according to Claim 1 or 2, **characterized in that** the rubber mixture comprises from 10 to 100 phr, preferably from 30 to 100 phr, of the functionalized diene rubber(s).

4. Rubber mixture according to at least one of Claims 1 to 3, **characterized in that** it comprises at least two diene rubbers of which at least one has been functionalized, where the glass transition temperature T_{g} of one diene rubber is from -50 to - 15°C and the glass transition temperature T_{g} of another diene rubber is from -110 to -50°C.

5. Rubber mixture according to Claim 4, **characterized in that** the diene rubber with glass transition temperature T_{g} of from -50 to -15°C has been functionalized.

6. Rubber mixture according to Claim 4 or 5, **characterized in that** the diene rubber with glass transition temperature T_{g} of from -110 to -50°C has been functionalized.

7. Rubber mixture according to at least one of Claims 1 to 6, **characterized in that** the aliphatic and/or aromatic hydrocarbon resin has been selected from the group consisting of terpene resins, Cs-resins, C₉-resins, cumarone-indene resins, and dicyclopentadiene (DCPD) resins, aromatic resin produced from α-methylstyrene, and copolymers of the monomers of said resin types.

8. Rubber mixture according to Claim 7, **characterized in that** the aliphatic and/or aromatic hydrocarbon resin is a C₅-resin.

9. Rubber mixture according to at least one of Claims 1 to 8, **characterized in that** it comprises from 5 to 50 phr, preferably from 10 to 30 phr, of aliphatic and/or aromatic hydrocarbon resin.

10. Rubber mixture according to at least one of Claims 1 to 9, **characterized in that** it comprises from 10 to 150 phr of silica.

11. Tire of which the tread is composed at least to some extent of a sulfur-vulcanized rubber mixture according to at least one of Claims 1 to 10.

## Revendications

1. Mélange de caoutchouc réticulable au soufre, contenant :
- au moins un caoutchouc diénique fonctionnalisé avec au moins un groupe choisi parmi les groupes hydroxyle, carboxyle, amino, phtalocyanine, époxy, silyle, silanol, siloxane et/ou aminosiloxane, dont la fonctionnalisation se présente le long de la chaîne polymère et/ou à l'extrémité, le caoutchouc diénique présentant une température de transition vitreuse T_{g} de -110 à -15 °C,
- au moins une résine hydrocarbonée aliphatique et/ou aromatique ayant un point de ramollissement (anneau et cône selon ASTM E 28) de 50 à 150 °C et un poids moléculaire moyen Mₙ de 200 à 2 000 g/mol, et une polydispersité D = M_{w}/Mₙ de 1 à 5, et
- au moins une charge polaire.

2. Mélange de caoutchouc selon la revendication 1, **caractérisé en ce que** le ou les caoutchoucs diéniques fonctionnalisés sont un copolymère de styrène-butadiène polymérisé en solution fonctionnalisé (S-SBR) ou des copolymères de styrène-butadiène polymérisés en solution fonctionnalisés (S-SBR).

3. Mélange de caoutchouc selon la revendication 1 ou 2, **caractérisé en ce que** le mélange de caoutchouc contient 10 à 100 pce, de préférence 30 à 100 pce, du caoutchouc diénique ou des caoutchoucs diéniques fonctionnalisés.

4. Mélange de caoutchouc selon au moins l'une quelconque des revendications 1 à 3, **caractérisé en ce qu'**il contient au moins deux caoutchoucs diéniques, parmi lesquels au moins un est fonctionnalisé, un caoutchouc diénique présentant une température de transition vitreuse T_{g} de -50 à -15 °C et un autre caoutchouc diénique présentant une température de transition vitreuse T_{g} de -110 à -50 °C.

5. Mélange de caoutchouc selon la revendication 4, **caractérisé en ce que** le caoutchouc diénique ayant une température de transition vitreuse T_{g} de -50 à -15 °C est fonctionnalisé.

6. Mélange de caoutchouc selon la revendication 4 ou 5, **caractérisé en ce que** le caoutchouc diénique ayant une température de transition vitreuse T_{g} de -110 à -50 °C est fonctionnalisé.

7. Mélange de caoutchouc selon au moins l'une quelconque des revendications 1 à 6, **caractérisé en ce que** la résine hydrocarbonée aliphatique et/ou aromatique est choisie dans le groupe constitué par les résines de terpène, en C₅, en C₉, de coumarone-indène et de dicyclopentadiène (DCPD), une résine aromatique fabriquée à partir d'α-méthylstyrène, ainsi que les copolymères constitués par les monomères de ces types de résine.

8. Mélange de caoutchouc selon la revendication 7, **caractérisé en ce que** la résine hydrocarbonée aliphatique et/ou aromatique est une résine en C₅.

9. Mélange de caoutchouc selon au moins l'une quelconque des revendications 1 à 8, **caractérisé en ce qu'**il contient 5 à 50 pce, de préférence 10 à 30 pce, d'une résine hydrocarbonée aliphatique et/ou aromatique.

10. Mélange de caoutchouc selon au moins l'une quelconque des revendications 1 à 9, **caractérisé en ce qu'**il contient 10 à 150 pce de silice.

11. Pneu, dont la bande de roulement est au moins partiellement constituée par un mélange de caoutchouc selon au moins l'une quelconque des revendications 1 à 10 vulcanisé avec du soufre.
